# EUROPÄISCHE PATENTSCHRIFT

(11) **EP 1 589 475 B1**
(45) Veröffentlichungstag und Bekanntmachung des Hinweises auf die Patenterteilung: **25.10.2006**
(21) Anmeldenummer: 04009375.9
(22) Anmeldetag: 21.04.2004
(51) Int. Cl.: G06T 1/00

(54) **Verfahren zum Versehen von Bild- oder Videodaten mit einem digitalen Wasserzeichen**
Method for inserting a digital watermark into image or video data
Procédé d'insertion d'un filigrane numérique dans des données d'image ou vidéo

(43) Veröffentlichungstag der Anmeldung: 26.10.2005
(73) Patentinhaber: Fraunhofer-Gesellschaft zur Förderung der angewandten Forschung e.V., 80686 München (DE)
(72) Erfinder: Thiemert, Stefan, 64287 Darmstadt (DE); Vogel, Thomas, 64372 Ober-Ramstadt (DE); Hauer, Enrico, 64283 Darmstadt (DE)
(74) Vertreter: Hilleringmann, Jochen

(56) Entgegenhaltungen:
- EP-A- 1 398 732
- US-A1- 2003 128 863
- MIN WU ET AL: "Digital watermarking using shuffling" IMAGE PROCESSING, 1999. ICIP 99. PROCEEDINGS. 1999 INTERNATIONAL CONFERENCE ON KOBE, JAPAN 24-28 OCT. 1999, PISCATAWAY, NJ, USA,IEEE, US, 24. Oktober 1999 (1999-10-24), Seiten 291-295, XP010369134 ISBN: 0-7803-5467-2
- LIEHUA XIE ET AL: "Image enhancement towards soft image authentication" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30. Juli 2000 (2000-07-30), Seiten 497-500, XP010511504 ISBN: 0-7803-6536-4

## Beschreibung

### Technisches Anwendungsgebiet

Die Erfindung betrifft ein Verfahren zum Versehen von Bild- und/oder Videodaten mit einem digitalen Wasserzeichen durch robustes und transparentes Einbetten von Informationen in die digitalen Bilder bzw. Videos.

### Stand der Technik, Nachteile der Technik

Digitale Wasserzeichen stellen keinen Kopierschutz dar, können jedoch zur Markierung von digitalen Medien eingesetzt werden. Diese Markierung kann unter anderem dazu beitragen, Personen von der Verbreitung illegaler Kopien abzuschrecken oder den Urheber eines Mediendokuments zu identifizieren. Wasserzeichen für digitale Videos können unter anderem im Bereich Video-ondemand oder zum Markieren von Spielfilm-DVDs eingesetzt werden.

Digitale Wasserzeichen werden durch drei wichtige Verfahrensparameter klassifiziert: Transparenz, Robustheit und Kapazität. Transparenz bedeutet, dass das Wasserzeichen bei Betrachtung des Bildes nicht sichtbar ist. Robust ist ein Wasserzeichen, wenn das Bild selbst nach einer oder mehreren Manipulationen immer noch korrekt auslesbar ist. Manipulationen können z.B. sein: Re-Enkodierung, Skalierung, Verrauschen der Bilder, Formatkonvertierung oder DA/AD-Wandlung. Schließlich ist mit Kapazität die Menge an Informationen gemeint, die als Wasserzeichen in das Datenmaterial eingebettet werden kann. Diese Parameter sind stark abhängig voneinander. Robuste Wasserzeichenverfahren haben in der Regel den Nachteil, dass bei sehr guter Transparenz und hoher Robustheit nur eine geringe Kapazität zur Verfügung steht, die für verschiedene Anwendungsgebiete nicht praktikabel ist. Dem gegenüber weisen Verfahren mit hoher Kapazität in der Regel eine eingeschränkte Robustheit bzw. eine schlechte Transparenz auf.

In US 2003/128863 wird ein Verfahren vorgestellt, das mit Hilfe von additiven Mustern eine Wasserzeichennachricht in ein Bild einbettet. Pseudozufällig generierte Sequenzen aus reellen Zahlen repräsentieren dabei Teile einer binären Nachricht, die als Wasserzeichen eingebettet werden soll. Mit Hilfe einer Kreuzkorrelation wird im Ausleseprozess in jedem Teil des Bildes eine Abschätzung getroffen, welche der pseudozufällig generierten Sequenzen aufgetragen wurde. Das Wasserzeichenverfahren benötigt zum Auslesen des Wasserzeichens nicht das Originaldokument.

### Mit der Erfindung gelöste Aufgabe

Eine Aufgabe der Erfindung ist es, ein Verfahren zum Versehen von Bild-und/oder Videodaten mit einem digitalen Wasserzeichen anzugeben, wobei das Wasserzeichen so konfigurierbar ist, dass die vom Benutzer geforderte Kapazität eingestellt werden kann, eine hohe Transparenz aufweist und robust ist gegenüber nicht-geometrischen Manipulationen am Datenmaterial.

### Grundzüge des Lösungsweges

Mit der Erfindung wird ein Verfahren zum Versehen von Bild- und/oder Videodaten mit einem digitalen Wasserzeichen vorgeschlagen, bei dem
a) ein Bild in mehrere quadratische Blöcke unterteilt wird,
b) jeder Block einer Frequenz-Transformation unterzogen wird, wodurch die Information des Bildes in Frequenzen unterteilt wird und diesen zugeordnete Koeffizienten ermittelt werden,
c) jedes Bild in rechteckige Bereiche unterteilt wird, wobei jeder Bereich mehrere Blöcke umfasst,
d) aus jedem Bereich jeweils ein beliebiger Block ausgewählt wird und die jeweils ausgewählten Blöcke sämtlicher Bereiche jeweils zu Gruppen zusammengefasst werden,
e) für jede Gruppe der Durchschnittswert der Koeffizienten (Gruppenkoeffizienten-Durchschnittswert) sämtlicher der Gruppe zugeordneter Blöcke ermittelt wird,
f) für jeden Block in jeder Gruppe der Durchschnittswert der Koeffizienten dieses Blocks (Blockkoeffizienten-Durchschnittswert) ermittelt wird,
g) ein Bit des digitalen Wasserzeichens mit eine binären Informationswert in eine Gruppe eingebettet wird, indem der Blockkoeffizienten-Durchschnittswert mindestens eines der Blöcke dieser Gruppe derart verändert wird, dass die Mehrzahl der Blöcke dieser Gruppe einen Blockkoeffizienten-Durchschnittswert aufweist, der kleiner ist als der Gruppenkoeffizienten-Durchschnittswert dieser Gruppe, oder
h) ein Bit des digitalen Wasserzeichens mit einem komplementären binären Informationswert in eine Gruppe eingebettet wird, indem der Blockkoeffizienten-Durchschnittswert mindestens eines der Blöcke dieser Gruppe derart verändert wird, dass die Mehrzahl der Blöcke dieser Gruppe einen Blockkoeffizienten-Durchschnittswert aufweist, der größer als der oder gleich dem Gruppenkoeffizienten-Durchschnittswert ist,
i) wobei zur Einbettung der binären Information in Schritt g) der Blockkoeffizienten-Durchschnittswert eines derjenigen Blöcke, dessen Blockkoeffizienten-Durchschnittswert größer ist als der Gruppenkoeffizienten-Durchschnittswert, bis auf weniger als der Gruppenkoeffizienten-Durchschnittswert verringert und der Blockkoeffizienten-Durchschnittswert eines anderen Blocks dieser Gruppe derart erhöht wird, dass der Gruppenkoeffizienten-Durchschnittswert unverändert bleibt, und
j) wobei zur Einbettung der binären Information in Schritt h) der Blockkoeffizienten-Durchschnittswert eines derjenigen Blöcke, dessen Blockkoeffizienten-Durchschnittswert geringer ist als der Gruppenkoeffizienten-Durchschnittswert, bis auf mehr als den Gruppenkoeffizienten-Durchschnittswert der Gruppe erhöht und der Blockkoeffizienten-Durchschnittswert eines anderen Blocks dieser Gruppe, der einen Blockkoeffizienten-Durchschnittswert oberhalb des Gruppenkoeffizienten-Durchschnittswerts aufweist, derart verringert wird, dass der Gruppenkoeffizienten-Durchschnittswert unverändert bleibt.
   Verschiedene Weiterbildungen dieses Verfahrens sind Gegenstand der jeweiligen Unteransprüche.
   Ausgangspunkt des erfindungsgemäßen Verfahrens ist ein Bild bzw. ein Frame eines Videos (nachfolgend ebenfalls mit Bild gemeint), das wie vom JPEG- bzw. MPEG-Standard bekannt transformiert wird. Hierzu wird das Bild in quadratische Blöcke unterteilt. Jeder Block wird anschließend einer Ort/Frequenz-Transformation unterzogen, um die Bildinformation nach Frequenzen zu trennen. Dadurch ergeben sich Koeffizientenmatrizen, in denen der Gleichanteil sämtlicher auftretender Frequenzen (DC-Koeffizient) und die Abweichungen der auftretenden Frequenzen vom Gleichanteil (AC-Koeffizienten) abgelegt sind.
   Zusätzlich wird das Bild in rechteckige Bereiche unterteilt, wobei jeder Bereich mehrere Blöcke umfasst. Anschließend werden aus den Bereichen in einer beliebigen Reihenfolge jeweils ein Block ausgewählt, wobei die jeweils ausgewählten Blöcke sämtlicher Bereiche zu Gruppen zusammengefasst werden. In dem Fall, in dem mehr Blöcke für eine Gruppe benötigt werden, als Bereiche des Bildes existieren, werden beispielsweise mehrere Blöcke aus mindestens einem der Bereiche zur Zuordnung zu einer Gruppe ausgewählt. Die Reihenfolge, in der aus den Bereichen Blöcke extrahiert werden, ist grundsätzlich beliebig. Eine Möglichkeit der Findung einer Reihenfolge besteht darin, dass die Bereiche ihrer Kantenintensitäten entsprechend in auf- oder absteigender Folge sortiert werden und diese Reihung pseudozufällig oder zufällig gemischt wird. Die Auswahl der Blöcke aus den Bereichen ist unabhängig von der Entstehung der Aneinanderreihung der Bereiche ebenfalls zufällig bzw. pseudozufällig. Unter Kantenintensität wird die Intensität bzw. die Größe eines Grauwert- bzw. Helligkeitssprungs innerhalb eines Bereiches verstanden. Kantendetektoren sind hinlänglich bekannt. Lediglich beispielsweise wird an dieser Stelle auf den sogenannten Canny-Edge-Detektor hingewiesen, der beschrieben ist in: J.F. Canny, "A computational approach do edge detection", IEEE Trans. On Pattern analysis and Machine intelligence, vol. PAMI-8, November 1986.
   Nachdem also Blöcke aus verschiedenen Bereichen des Bildes zu Gruppen zusammengefasst worden sind, wird der Durchschnittswert der Koeffizienten jedes Blockes (Blockkoeffizienten-Durchschnittswert) ermittelt. Zusätzlich wird für jede Gruppe der Durchschnittswert der Koeffizienten sämtlicher dieser Gruppe zugeordneten Blöcke (Gruppenkoeffizienten-Durchschnittswert) ermittelt.
   Das digitale Wasserzeichen besteht letztendlich aus einer Aneinanderreihung binärer Informationen, also zweier unterschiedlicher Informationen (beispielsweise "0" und "1"). Für die Einbettung dieser binären Informationen in eine Gruppe wird zunächst untersucht, wie viel Blöcke dieser Gruppe einen Blockkoeffizienten-Durchschnittswert aufweisen, der kleiner als der Gruppenkoeffizienten-Durchschnittswert dieser Gruppe ist. Damit wird automatisch auch untersucht, wie viel Blöcke pro Gruppe existieren, deren Blockkoeffizienten-Durchschnittswerte größer als oder gleich dem Gruppenkoeffizienten-Durchschnittswert sind.
   Zur Einbettung der einen binären Informationen (beispielsweise "0") werden die Blockkoeffizienten-Durchschnittswerte der Mindestzahl von Blöcken verändert, die erforderlich ist, damit in dieser Gruppe die Mehrzahl der Blöcke einen Blockkoeffizienten-Durchschnittswert aufweist, der kleiner ist als der Gruppenkoeffizienten-Durchschnittswert. Andere Blöcke dieser Gruppe werden bezüglich ihrer Blockkoeffizienten-Durchschnittswerte gleichzeitig derart verändert, dass insgesamt der Gruppenkoeffizienten-Durchschnittswert dieser Gruppe sich nicht ändert. Hierbei bietet es sich an, als Blöcke, deren Blockkoeffizienten-Durchschnittswerte verändert werden, damit die Mehrzahl der Blöcke einen Blockkoeffizienten-Durchschnittswert aufweist, der geringer ist als der Gruppenkoeffizienten-Durchschnittswert, solche Blöcke zu verwenden, deren Blockkoeffizienten-Durchschnittswerte einen möglichst geringen Unterschied zum Gruppenkoeffizienten-Durchschnittswert aufweisen. Als Blöcke, deren Blockkoeffizienten-Durchschnittswerte zur Beibehaltung des Gruppenkoeffizienten-Durchschnittswerts verändert werden, werden solche Blöcke verwendet, deren Blockkoeffizienten-Durchschnittswerte einen möglichst großen Abstand vom Gruppenkoeffizienten-Durchschnittswert aufweisen.
   Zur Einbettung der zweiten binären Information (beispielsweise "1") wird ganz entsprechend verfahren.
   Nach dieser Prozedur sind also die binären Informationen in die einzelnen Gruppen eingebettet. Jetzt kann diese binäre Information kodiert in die jeweiligen Blöcke abgelegt werden, indem deren Koeffizientenmatrizen an bestimmten Stellen gezielt geändert werden.
   Zusammenfassend lässt sich das erfindungsgemäße Verfahren auch wie folgt beschreiben.
   Zunächst wird ein Bild bzw. ein Frame eines Videos in mehrere quadratische Blöcke unterteilt. Auf diese Blöcke wird anschließend eine Frequenz-Transformation, z.B. Diskrete Kosinus Transformation (DCT) angewandt, so dass die Bildinformation nach Frequenzen getrennt ist.
   Ein binärer Vektor, der eine beliebige Information repräsentiert, wird durch folgende Schritte eingebettet:
   1. Im Bild/Frame werden die Kanten ermittelt.
   2. Das Bild wird in rechteckige Bereiche aufgeteilt, von denen jeder mehrere Blöcke umfasst. Die Bereiche werden nach der Stärke der ermittelten Kantenintensität sortiert. Die dadurch generierte Liste wird pseudozufällig gemischt. In dieser Reihenfolge werden die definierten Bereiche zur Einbettung des Vektors verwendet.
   3. Innerhalb jedes Bereiches wird pseudozufällig ein Block ausgewählt. Die ausgewählten Blöcke werden in Gruppen zusammengefasst.
   4. Für eine Gruppe wird der Durchschnitt aller AC-Koeffizienten in allen Blöcken berechnet. Zusätzlich wird für jeden Block der Durchschnitt seiner AC-Koeffizienten ermittelt.
   5. Die Blöcke innerhalb einer Gruppe werden nach der Größe des Durchschnitts sortiert.
   6. Soll eine "0" in die Gruppe eingebettet werden, so muss die Mehrzahl der Blöcke einen Durchschnitt haben, der geringer ist, als der Durchschnitt der gesamten Gruppe. Im Falle einer einzubettenden "1" muss dieses Verhältnis umgekehrt sein. Das Verhältnis wird hergestellt, indem auf die AC-Koeffizienten geeigneter Blöcke der Gruppe ein Wert aufgetragen wird.
   7. Zusätzlich kann in jeden Block der Gruppe ein Bitmuster eingebracht werden, das die einzubettende Information repräsentiert. Die gewählten Koeffizienten werden z.B. dabei so verändert, dass die Differenzen zwischen den Koeffizienten die einzubettende Information repräsentieren.
      Der binäre Vektor wird aus einem Dokument folgendermaßen ausgelesen:

   1. Im Bild/Frame werden die Kanten ermittelt.
   2. Das Bild wird in rechteckige Bereiche aufgeteilt. Die Bereiche werden nach der Stärke der ermittelten Kantenintensität sortiert. Die dadurch generierte Liste wird pseudozufällig gemischt. In dieser Reihenfolge werden die definierten Bereiche zum Auslesen des Vektors verwendet.
   3. Innerhalb jedes Bereiches wird pseudozufällig ein Block ausgewählt. Die ausgewählten Blöcke werden in Gruppen zusammengefasst.
   4. Für eine Gruppe wird der Durchschnitt aller AC-Koeffizienten in allen Blöcken berechnet. Zusätzlich wird für jeden Block der Durchschnitt seiner AC-Koeffizienten ermittelt.
   5. Hat die Mehrzahl der Blöcke einen Durchschnitt, der höher oder gleich dem Durchschnitt der gesamten Gruppe ist, so wird eine "1" aus der Gruppe ausgelesen, andernfalls eine "0".
   6. Das Muster innerhalb jedes Blockes wird ausgelesen und mit einem Referenzmuster verglichen, um die eingebettete Information zu extrahieren.
   7. Anhand einer dynamisch geregelten Gewichtung zwischen den Informationen aus 5. und 6. wird die Information aus der Blockgruppe bestimmt.

### Erzeugte Verbesserungen und Vorteile gegenüber dem Stand der Technik

Das erfindungsgemäße Verfahren bietet die folgenden Vorteile:
1. Das Wasserzeichen verfügt über eine sehr gute Transparenz. Speziell bei Datenmaterial mit hoher Qualität ist durch Qualitätsuntersuchung die Erzielung einer erhöhten Transparenz mittels der Erfindung festgestellt worden.
2. Das Wasserzeichen kann eine sehr große Menge an Informationen in das Datenmaterial einbringen. Die Kapazität des Wasserzeichens ist dynamisch regelbar.
3. Das Verfahren ist robust gegenüber nicht-geometrischen Transformationen.
4. Der Ansatz ist auf verschiedene Bild- und Videoformate anwendbar.
   Ausführungsbeispiel
   Die Erfindung wird nachfolgend anhand der Zeichnung näher erläutert. Im einzelnen zeigen dabei:

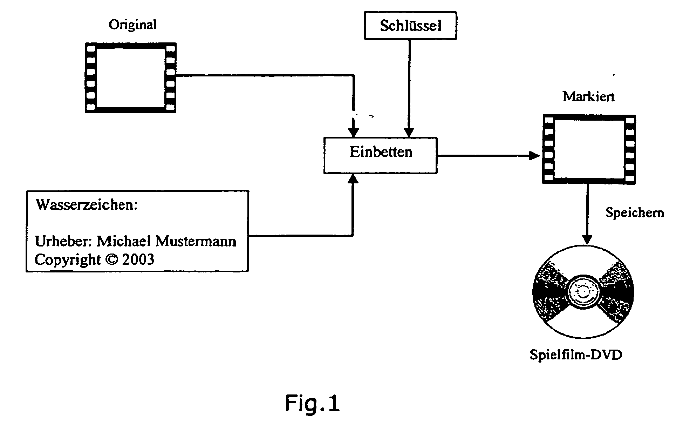

   Fig. 1 eine Verwendungsmöglichkeit für ein Wasserzeichenverfahren und
   Fign. 2 bis 9
      graphische Darstellungen zur Verdeutlichung der einzelnen Verfahrensschritte der Erfindung.

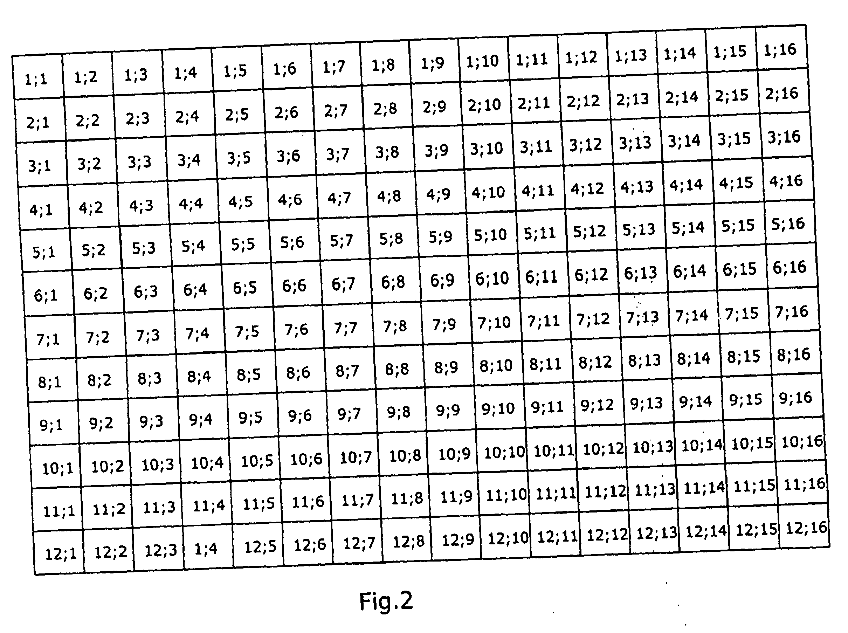

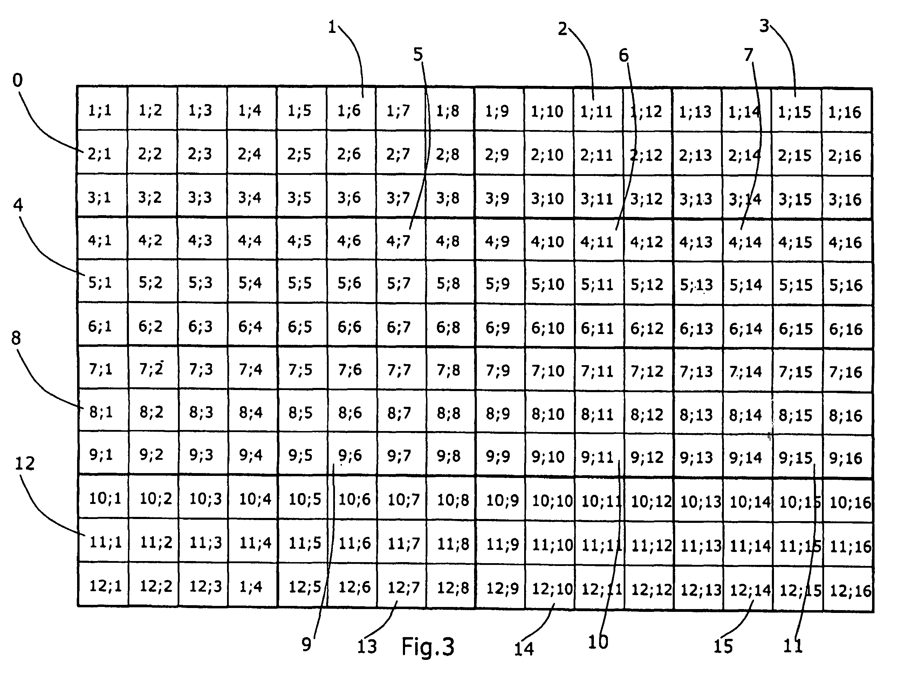

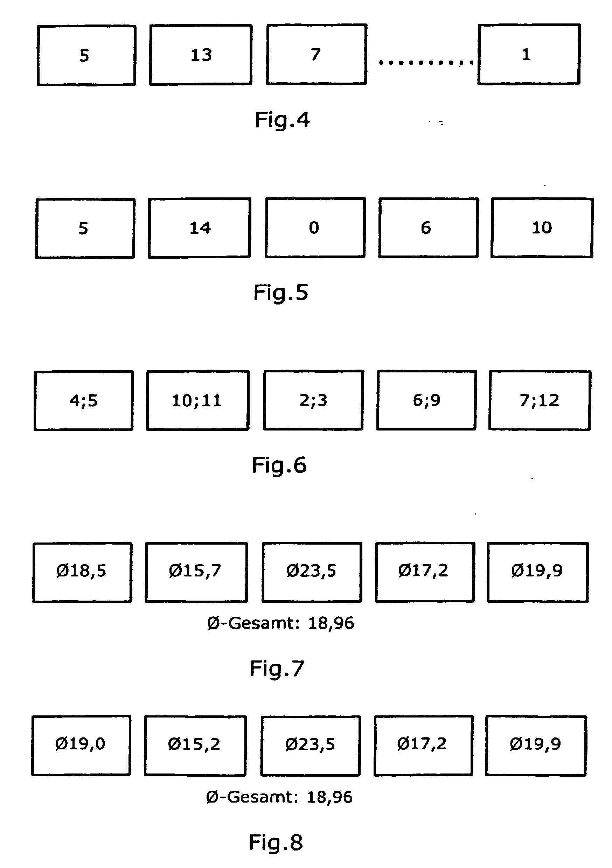

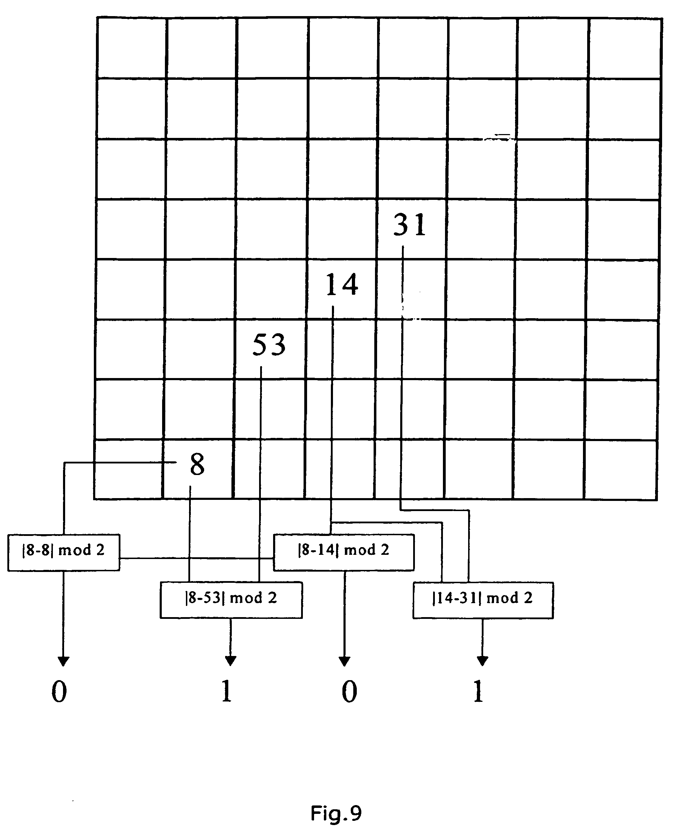

   Fig. 1 zeigt eine Verwendungsmöglichkeit für ein Wasserzeichenverfahren. In diesem Beispiel wird eine Spielfilm-DVD mit einem digitalen Wasserzeichen versehen. Das Wasserzeichen erhält dabei Informationen über den Urheber.
   Anhand der Fign. 2 bis 9 wird nachfolgend der Einbettungs- und Auslesevorgang des Wasserzeichens erläutert. Dabei wird exemplarisch die Einbettung der binären Information "1" in eine Gruppe als Bitmuster 0101 in einen Block und die Modifizierung der Blockdurchschnittswerte innerhalb einer Gruppe dargestellt. Im Ausleseprozess werden der Blockdurchschnitt und das Bitmuster analysiert.
   Bei dem hier zu beschreibenden Beispiel soll ein binärer Vektor in ein nach JPEG-(MPEG)-Standard kodiertes Bild als Wasserzeichen eingebettet werden. Die Dekodierung des Bildes in den Frequenzbereich wurde bereits durchgeführt.
   Für den Einbettungsvorgang werden folgende Schritte durchgeführt:
   1. Im ersten Schritt werden die Parameter des Wasserzeichenverfahrens festgelegt. Mit diesen Parametern wird unter anderem eingestellt, wie viele Bits in ein Bild/Frame eingebracht werden, über welche Größe eine Blockgruppe verfügen soll und wie viele Koeffizienten zur Markierung herangezogen werden.
   2. Die einzubringenden Informationen werden in einen binären Vektor umgewandelt. Der Schlüssel für das Wasserzeichenverfahren und die Länge des Wasserzeichens (in Bit) wird festgelegt.
   3. Eine zu markierende Datei wird ausgewählt. Es wird in diesem Beispiel von einer nach dem JPEG-Standard kodierten Bilddatei ausgegangen. Das JPEG-Bild muss dabei bis zu den quantisierten DCT-Blöcken dekodiert werden (Fig. 2).
   4. Der Wasserzeichenalgorithmus wird mit den Parametern, dem Schlüssel und der zu markierenden Datei initialisiert.
   5. Die Kanten des Bildes werden mit Hilfe eines Kantendetektors ermittelt. Danach wird das Bild in rechteckige Bereiche gegliedert (Fig. 3). Anhand der Kanteninformationen werden die definierten Bereiche sortiert (Fig. 4) und pseudozufällig gemischt (Fig. 5). In der sortierten Reihenfolge werden die Bereiche zur Einbettung des Vektors verwendet.
   6. Innerhalb jedes Bereiches wird pseudozufällig ein Block ausgewählt. Die ausgewählten Blöcke werden in Gruppen zusammengefasst (Fig. 6). Werden mehr Blöcke für eine Gruppe benötigt als Bereiche definiert sind, werden Bereiche für die Auswahl mehrfach verwendet.
   7. Für eine Gruppe wird der Durchschnitt aller AC-Koeffizienten in allen Blöcken berechnet. Zusätzlich wird für jeden Block der Durchschnitt seiner AC-Koeffizienten ermittelt (Fig. 7).
   8. Die Blöcke innerhalb einer Gruppe werden nach der Größe ihres Durchschnitts sortiert.
   9. Soll eine "0" in die Gruppe eingebettet werden, so muss die Mehrzahl der Blöcke einen Durchschnitt haben, der geringer ist/ als der Durchschnitt der gesamten Gruppe. Im Falle einer einzubettenden "1" muss dieses Verhältnis umgekehrt sein. Das Verhältnis wird hergestellt, indem auf die AC-Koeffizienten einzelner Blöcke der Gruppe ein Wert aufgetragen wird. Ein Block ist hierfür insbesondere dann geeignet, wenn er nur geringfügig modifiziert werden muss, um das gewünschte Verhältnis in der Gruppe herzustellen. Im Allgemeinen handelt es sich dabei um den Block, bei dem der Betrag der Differenz zwischen dem Blockdurchschnitt und dem Gruppendurchschnitt am geringsten ausfällt (Fig. 8).
   10. Zusätzlich wird in jeden Block der Gruppe ein Bitmuster eingebracht, das die einzubettende Information repräsentiert (Fig. 9). Die gewählten Koeffizienten des Blocks werden dabei z.B. so verändert, dass die Differenzen zwischen den Koeffizienten die einzubettende Information repräsentieren. Im vorliegenden Beispiel werden jeweils vier Koeffizienten zum Einbetten des Musters in jedem Block benutzt. Dabei repräsentiert die Bitfolge 0010 eine "0" und 0101 eine "1". Ein Bit aus zwei Koeffizienten ergibt sich z.B. aus der Differenz beider Koeffizienten modulo 2.
      Im Beispiel gemäß Fig. 9 werden zur kodierten Einbettung einer "1" die vier Koeffizienten 8, 53, 14, 31 verwendet. Jeder Koeffizient wird mit 8, also dem kleinsten der ausgewählten Koeffizienten verglichen. Die Ein-bettung läuft dann wie folgt ab:
      8 wird mit 8 verglichen -> |8-8|mod 2 = 0
      8 wird mit 53 verglichen -> |8-53|mod 2 = 1
      8 wird mit 14 verglichen -> |8-14|mod 2 = 0
      8 wird mit 31 verglichen -> |8-31|mod 2 = 1.

      Wenn die Koeffizienten nicht so sind, wie sie zur Einbettung der kodierten Information (Bitmuster 0101) erforderlich sind, so werden sie entsprechend verändert. Weicht z.B. der Koeffizient 53 von diesem Wert ab, z.B. weil er 52 beträgt, so wird dieser Wert auf 53 oder 51 abgeändert, so dass die auf die Koeffizienten 8 und 52 angewandte Rechenvorschrift mod 2 als Ergebnis eine 1 ergibt (statt 0, wie es bei 52 der Fall wäre).
11. Sind alle Bits des einzubettenden Vektors in das Datenmaterial eingebracht worden, wird das Bild wieder in das JPEG- bzw. MPEG-Format zurückgeführt.
   Das Auslesen des binären Vektors läuft wie folgt ab:

1. Im ersten Schritt werden die Parameter des Wasserzeichenverfahrens festgelegt. Dabei müssen die Werte der Parameter identisch zu denen des Einbettungsprozesses sein.
2. Der Schlüssel für das Wasserzeichenverfahren und die erwartete Länge des Wasserzeichens (in Bit) wird festgelegt.
3. Eine markierte Datei wird ausgewählt. Im Beispiel wird von einer nach dem JPEG-Standard kodierten Bilddatei ausgegangen. Das JPEG-Bild muss dabei bis zu den quantisierten DCT-Blöcken dekodiert werden.
4. Der Wasserzeichenalgorithmus wird mit den Parametern, dem Schlüssel und der markierten Datei initialisiert.
5. Die Kanten des Bildes werden mit Hilfe eines Kantendetektors ermittelt. Danach wird das Bild in rechteckige Bereiche gegliedert. Anhand der Kanteninformationen werden die definierten Bereiche sortiert und pseudozufällig gemischt. In der sortierten Reihenfolge werden die Bereiche zum Auslesen des Vektors verwendet.
6. Innerhalb jedes Bereiches wird pseudozufällig ein Block ausgewählt. Die ausgewählten Blöcke werden in Gruppen zusammengefasst. Werden mehr Blöcke für eine Gruppe benötigt als Bereiche definiert sind, werden Bereiche für die Auswahl mehrfach verwendet.
7. Für eine Gruppe wird der Durchschnitt aller AC-Koeffizienten in allen Blöcken berechnet. Zusätzlich wird für jeden Block der Durchschnitt seiner AC-Koeffizienten ermittelt.
8. Hat die Mehrzahl der Blöcke einen Durchschnitt, der höher oder gleich dem Durchschnitt der gesamten Gruppe ist, so wird eine "1" aus der Gruppe ausgelesen, andernfalls eine "0".
9. Das Muster innerhalb jedes Blockes wird ausgelesen und mit einem Referenzmuster verglichen, um die eingebettete Information zu extrahieren. Hier wird analog zum Bitmustereinbettungsprozess verfahren, und zwar wie folgt:
   8 wird mit 8 verglichen -> |8-8|mod 2 = 0
   8 wird mit 53 verglichen -> |8-53| mod 2 = 1
   8 wird mit 14 verglichen -> |8-14|mod 2 = 0
   8 wird mit 31 verglichen -> |8-31|mod 2 = 1.

   Es wird also das Muster 0101 ausgelesen -> 1.
   Unterscheidet sich das ausgelesene Muster an weniger Stellen vom Referenzvektor 0010 als vom Referenzvektor 0101, so wird eine "0" aus dem Block ausgelesen. Im anderen Falle eine "1". Für die gesamte Blockgruppe wird eine "0" ermittelt, falls für die Mehrheit der Blöcke eine "0" ausgelesen wurde, andernfalls eine "1".
10. Die Gewichtung-zwischen den Informationen aus 8. und 9. kann dynamisch geregelt werden. Dadurch kann einerseits der Anwender das Verhältnis zwischen den ermittelten Informationen einstellen, andererseits bestimmt das Verfahren Wahrscheinlichkeiten für die ausgelesenen Informationen. Mit Hilfe dieser Wahrscheinlichkeiten kann der Anwender erkennen, wie zuverlässig die Korrektheit der ausgelesenen Bits ist.
   Durch die Verwendung von Blockgruppen wird zum einen die Kapazität des Verfahrens gesteigert, zum anderen kann dadurch die Robustheit aufgrund von Redundanz verbessert werden. Das Bitmuster wird zur Kontrolle der in der Blockgruppe eingebrachten Information verwendet.

## Patentansprüche

1. Verfahren zum Versehen von Bild- und/oder Videodaten mit einem digitalen Wasserzeichen, bei dem
a) ein Bild in mehrere quadratische Blöcke unterteilt wird,
b) jeder Block einer Frequenz-Transformation unterzogen wird, wodurch die Information des Bildes in Frequenzen unterteilt wird und diesen zugeordnete Koeffizienten ermittelt werden,
c) jedes Bild in rechteckige Bereiche unterteilt wird, wobei jeder Bereich mehrere Blöcke umfasst,
d) aus jedem Bereich jeweils ein beliebiger Block ausgewählt wird und die jeweils ausgewählten Blöcke sämtlicher Bereiche jeweils zu Gruppen zusammengefasst werden,
e) für jede Gruppe der Durchschnittswert der Koeffizienten (Gruppenkoeffizienten-Durchschnittswert) sämtlicher der Gruppe zugeordneter Blöcke ermittelt wird,
f) für jeden Block in jeder Gruppe der Durchschnittswert der Koeffizienten dieses Blocks (Blockkoeffizienten-Durchschnittswert) ermittelt wird,
g) ein Bit des digitalen Wasserzeichens mit einem binären Informationswert in eine Gruppe eingebettet wird, indem der Blockkoeffizienten-Durchschnittswert mindestens eines der Blöcke dieser Gruppe derart verändert wird, dass die Mehrzahl der Blöcke dieser Gruppe einen Blockkoeffizienten-Durchschnittswert aufweist, der kleiner ist als der Gruppenkoeffizienten-Durchschnittswert dieser Gruppe, oder
h) ein Bit des digitalen Wasserzeichens mit einem komplementären binären Informationswert in eine Gruppe eingebettet wird, indem der Blockkoeffizienten-Durchschnittswert mindestens eines der Blöcke dieser Gruppe derart verändert wird, dass die Mehrzahl der Blöcke dieser Gruppe einen Blockkoeffizienten-Durchschnittswert aufweist, der größer als der oder gleich dem Gruppenkoeffizienten-Durchschnittswert ist,
i) wobei zur Einbettung der binären Information in Schritt g) der Block-koeffizienten-Durchschnittswerte eines derjenigen Blöcke, deren Blockkoeffizienten-Durchschnittswert größer sind als der Gruppenkoeffizienten-Durchschnittswert, bis auf weniger als der Gruppenkoeffizienten-Durchschnittswert verringert und der Blockkoeffizienten-Durchschnittswert eines anderen Blocks dieser Gruppe derart erhöht wird, dass der Gruppenkoeffizienten-Durchschnittswert unverändert bleibt, und
j) wobei zur Einbettung der binären Information in Schritt h) der Blockkoeffizienten-Durchschnittswert eines derjenigen Blöcke, deren Blockkoeffizienten-Durchschnittswerttgeringer sind als der Gruppenkoeffizienten-Durchschnittswert, bis auf mehr als den Gruppenkoeffizienten-Durchschnittswert der Gruppe erhöht und der Blockkoeffizienten-Durchschnittswert eines anderen Blocks dieser Gruppe, der einen Blockkoeffizienten-Durchschnittswert oberhalb des Gruppenkoeffizienten-Durchschnittswerts aufweist, derart verringert wird, dass der Gruppenkoeffizienten-Durchschnittswert unverändert bleibt.
2. Verfahren nach Anspruch 1, **dadurch gekennzeichnet, dass** der mindestens eine Block, dessen Blockkoeffizienten-Durchschnittswert in Schritt i) zur Erzielung der Mehrzahl von Blöcken mit einem Blockkoeffizienten-Durchschnittswert unterhalb des Gruppenkoeffizienten-Durchschnittswerts verringert wird, derjenige Block ist, dessen Blockkoeffizienten-Durchschnittswert oberhalb des Gruppenkoeffizienten-Durchschnittswerts liegt und von diesem die geringste Abweichung aufweist.
3. Verfahren nach Anspruch 1 oder 2, **dadurch gekennzeichnet, dass** der mindestens eine Block, dessen Blockkoeffizienten-Durchschnittswert in Schritt j) zur Erzielung der Mehrzahl von Blöcken mit einem Blockkoeffizienten-Durchschnittswert oberhalb des Gruppenkoeffizienten-Durchschnittswerts erhöht wird, derjenige Block ist, dessen Blockkoeffizienten-Durchschnittswert unterhalb des Gruppenkoeffizienten-Durchschnittswerts liegt und von diesem die geringste Abweichung aufweist.
4. Verfahren nach einem der Ansprüche 1 bis 3, **dadurch gekennzeichnet, dass** der mindestens eine Block, dessen Blockkoeffizienten-Durchschnittswert in Schritt i) zur Beibehaltung des Gruppenkoeffizienten-Durchschnittswerts erhöht wird, derjenige Block ist, dessen Blockkoeffizienten-Durchschnittswert oberhalb des Gruppenkoefhzienten-Durchschnittswerts liegt und von diesem die größte Abweichung aufweist.
5. Verfahren nach einem der Ansprüche 1 bis 4, **dadurch gekennzeichnet, dass** der mindestens eine Block, dessen Blockkoeffizienten-Durchschnittswert in Schritt j) zur Beibehaltung des Gruppenkoeffizienten-Durchschnittswerts verringert wird, derjenige Block ist, dessen Blockkoeffizienten-Durchschnittswert unterhalb des Gruppenkoeffizienten-Durchschnittswerts liegt und von diesem die größte Abweichung aufweist.
6. Verfahren nach einem der Ansprüche 1 bis 5, **dadurch gekennzeichnet, dass** bei der Bearbeitung der Bereiche des Bildes in Schritt d) gemäß den Schritten e) bis j) die Reihenfolge der Bereiche beliebig ist.
7. Verfahren nach einem der Ansprüche 1 bis 6, **dadurch gekennzeichnet, dass** für jeden Bereich eines Bildes die Intensität von Kanten ermittelt wird, dass die Bereiche nach der Größe der ermittelten Kantenintensitäten sortiert werden und dass die Bereiche eines Bildes zur weiteren Bearbeitung gemäß den Schritten e) bis j) zufällig bzw. pseudozufällig aus der nach Größe der Kantenintensitäten abfallend oder aufsteigend sortierten Liste von Bereichen ausgewählt werden.
8. Verfahren nach einem der Ansprüche 1 bis 7, **dadurch gekennzeichnet, dass** die binären Informationen in bereits kodierter Form in die jeweilige Gruppe eingebettet werden.
9. Verfahren nach einem der Ansprüche 1 bis 8, **dadurch gekennzeichnet, dass** zur Einbettung einer binären Information in eine Gruppe ein oder mehrere Koeffizienten mindestens eines Blocks und vorzugsweise jedes Blocks der Gruppe verändert wird/werden.
10. Verfahren nach einem der Ansprüche 1 bis 9, **dadurch gekennzeichnet, dass** in dem Fall, in dem mehrere Blöcke für eine Gruppe benötigt werden als Bereiche des Bildes existieren, mehrere Blöcke aus mindestens einem der Bereiche zur Zuordnung zu einer Gruppe ausgewählt werden.

## Claims

1. A method for inserting a digital watermark into image and/or video data, wherein
a) an image is subdivided into a plurality of quadratic blocks,
b) each block is subjected to a frequency transformation to subdivide the information of the image into frequencies and to detect coefficients assigned to these frequencies,
c) each image is subdivided into rectangular areas, with each area comprising a plurality of blocks,
d) from each area, respectively one arbitrary block is selected and the respectively selected blocks of all areas are respectively combined into groups,
e) for each group, the average value of the coefficients (group coefficient average value) of all blocks assigned to the group is detected,
f) for each block in each group, the average value of the coefficients of this block (block coefficient average value) is detected,
g) one bit of the digital watermark including a binary information value is embedded into a group in that the block coefficient average value of at least one of the blocks of this group is altered in such a manner that the majority of the blocks of this group has a block coefficient average value which is smaller than the group coefficient average value of this group, or
h) one bit of the digital watermark including a complementary binary information value is embedded into a group in that the block coefficient average value of at least one of the blocks of this group is altered in such a manner that the majority of the blocks of this group has a block coefficient average value which is larger than or equal to the group coefficient average value of this group,
i) wherein, for embedding the binary information in step g), the block coefficient average value of one of those blocks whose block coefficient average values are larger than the group coefficient average value, is reduced below the group coefficient average value, and the block coefficient average value of another block of this group is increased in such a manner that the group coefficient average value remains unchanged, and
j) wherein, for embedding the binary information in step h), the block coefficient average value of one of those blocks whose block coefficient average values are smaller than the group coefficient average value, is increased above the group coefficient average value of the group, and the block coefficient average value of another block of this group which has a block coefficient average value above the group coefficient average value, is reduced in such a manner that the group coefficient average value remains unchanged.
2. The method according to claim 1, **characterized in that** the at least one block whose block coefficient average value is reduced in step i) for obtaining the majority of blocks having a block coefficient average value below the group coefficient average value, is that block whose block coefficient average value is above the group coefficient average value and has the smallest deviation therefrom.
3. The method according to claim 1 or 2, **characterized in that** the at least one block whose block coefficient average value is reduced in step j) for obtaining the majority of blocks having a block coefficient average value above the group coefficient average value, is that block whose block coefficient average value is below the group coefficient average value and has the smallest deviation therefrom.
4. The method according to any one of claims 1 to 3, **characterized in that** the at least one block whose block coefficient average value is increased in step i) for maintaining the group coefficient average value, is that block whose block coefficient average value is above the group coefficient average value and has the largest deviation therefrom.
5. The method according to any one of claims 1 to 4, **characterized in that** the at least one block whose block coefficient average value is reduced in step j) for maintaining the group coefficient average value, is that block whose block coefficient average value is below the group coefficient average value and has the largest deviation therefrom.
6. The method according to any one of claims 1 to 5, **characterized in that**, in the processing of the areas of the image in step d) the processing order of the areas in steps e) to j) can be selected arbitrarily.
7. The method according to any one of claims 1 to 6, **characterized in that**, for each area of an image, the intensity of edges is detected, that the areas are sorted according to the size of the detected edge intensities, and that the areas of an image, for the further processing according to steps e) to j), are selected in a random or pseudo-random manner from the list of areas sorted in ascending or descending order of the amount of edge intensities.
8. The method according to any one of claims 1 to 7, **characterized in that** the binary information is embedded into the respective group in precoded form.
9. The method according to any one of claims 1 to 8, **characterized in that**, for embedding binary information into a group, one or a plurality of coefficients of at least one block and preferably of each block of the group are altered.
10. The method according to any one of claims 1 to 9, **characterized in that**, in the case that the blocks needed for a group are larger in number than the existing areas of the image, a plurality of groups are selected from at least one of the areas for assignment to a group.

## Revendications

1. Procédé d'insertion d'un filigrane numérique dans des données d'image ou vidéo, dans lequel
a) une image est subdivisée en plusieurs blocs carrés,
b) chaque bloc est soumis à une transformation de fréquence, ce qui subdivise l'information de l'image en fréquences, et des coefficients attribués à ces fréquences sont déterminés,
c) chaque image est subdivisée en zones rectangulaires, chaque zone contenant plusieurs blocs,
d) un bloc est sélectionné au hasard dans chaque zone, et les blocs sélectionnés de toutes les zones sont réunis en groupes,
e) la valeur moyenne des coefficients (la valeur moyenne des coefficients de groupe) de tous les blocs associés à un groupe est déterminée pour tous les groupes,
f) la valeur moyenne des coefficients de chaque bloc (la valeur moyenne des coefficients de bloc) est déterminée dans tous les groupes
g) un bit du filigrane numérique ayant une valeur d'information binaire est inséré dans un groupe en modifiant la valeur moyenne des coefficients de bloc d'au moins un des blocs de ce groupe de telle manière que la majorité des blocs de ce groupe présente une valeur moyenne des coefficients de bloc qui est plus petite que la valeur moyenne des coefficients de groupe de ce groupe, ou bien
h) un bit du filigrane numérique ayant une valeur d'information binaire complémentaire est inséré dans un groupe en modifiant la valeur moyenne des coefficients de bloc d'au moins un des blocs de ce groupe de telle manière que la majorité des blocs de ce groupe présente une valeur moyenne des coefficients de bloc qui est plus grande ou égale à la valeur moyenne des coefficients de groupe de ce groupe,
i) la valeur moyenne des coefficients de bloc d'un des blocs dont la valeur moyenne des coefficients de bloc est plus grande que la valeur moyenne des coefficients de groupe étant diminuée, en vue de l'insertion de l'information binaire à l'étape g), à une grandeur plus petite que la valeur moyenne des coefficients de groupe, la valeur moyenne des coefficients de bloc d'un autre bloc de ce groupe étant augmentée de telle sorte que la valeur moyenne des coefficients de groupe reste inchangée, et
j) la valeur moyenne des coefficients de bloc d'un des blocs dont la valeur moyenne des coefficients de bloc est plus petite que la valeur moyenne des coefficients de groupe étant augmentée, en vue de l'insertion de l'information binaire à l'étape h), à une valeur plus grande que la valeur moyenne des coefficients de groupe, la valeur moyenne des coefficients de bloc d'un autre bloc de ce groupe qui présente une valeur moyenne des coefficients de bloc plus élevée que la valeur moyenne des coefficients de groupe étant diminuée de telle sorte que la valeur moyenne des coefficients de groupe reste inchangée.

2. Procédé selon la revendication 1, **caractérisé en ce que** le au moins un bloc dont la valeur moyenne des coefficients de bloc est diminuée à l'étape i) pour obtenir la majorité des blocs présentant une valeur moyenne des coefficients de bloc située au-dessous de la valeur moyenne des coefficients de groupe est le bloc dont la valeur moyenne des coefficients de bloc est supérieure à la valeur moyenne des coefficients de groupe et qui présente la plus petite déviation de celle-ci.

3. Procédé selon la revendication 1 ou 2, **caractérisé en ce que** le au moins un bloc dont la valeur moyenne des coefficients de bloc est augmentée à l'étape j) pour obtenir la majorité des blocs présentant une valeur moyenne des coefficients de bloc située au-dessus de la valeur moyenne des coefficients de groupe est le bloc dont la valeur moyenne des coefficients de bloc est inférieure à la valeur moyenne des coefficients de groupe et qui présente la plus petite déviation de celle-ci.

4. Procédé selon l'une des revendications 1 à 3, **caractérisé en ce que** le au moins un bloc dont la valeur moyenne des coefficients de bloc est augmentée à l'étape i) afin de maintenir la valeur moyenne des coefficients de groupe, est le bloc dont la valeur moyenne des coefficients de bloc est située au-dessus de la valeur moyenne des coefficients de groupe et qui présente la plus grande déviation de celle-ci.

5. Procédé selon l'une des revendications 1 à 4, **caractérisé en ce que** le au moins un bloc dont la valeur moyenne des coefficients de bloc est diminuée dans l'étape j) afin de maintenir la valeur moyenne des coefficients de groupe est le bloc dont la valeur moyenne des coefficients de bloc est située au-dessous de la valeur moyenne des coefficients de groupe et qui présente la plus grande déviation de celle-ci.

6. Procédé selon l'une des revendications 1 à 5, **caractérisé en ce que**, lors du traitement des zones de l'image à l'étape d) selon les étapes e) à j), la séquence des zones est aléatoire.

7. Procédé selon l'une des revendications 1 à 6, **caractérisé en ce que** l'intensité de bordures est déterminée pour chaque zone de l'image, que les zones sont triées selon la grandeur des intensités de bordures déterminées, et que les zones d'une image sont sélectionnées en vue d'un traitement ultérieur selon les étapes e) à j) de façon aléatoire ou pseudo-aléatoire dans la liste des zones triée selon les grandeurs des intensités de bordures par ordre croissant ou décroissant.

8. Procédé selon l'une des revendications 1 à 7, **caractérisé en ce que** les informations binaires sont insérées dans le groupe respectif sous forme déjà codée.

9. Procédé selon l'une des revendications 1 à 8, **caractérisé en ce que**, afin d'insérer une information binaire dans un groupe, un ou plusieurs coefficients d'un bloc au moins, et de préférence de tous les blocs d'un groupe, sont modifiés.

10. Procédé selon l'une des revendications 1 à 9, **caractérisé en ce que**, au cas où un nombre de blocs supérieur au nombre de zones existantes de l'image est nécessaire pour un groupe, plusieurs blocs sont sélectionnés dans au moins une des zones afin de les associer à un groupe.
